# EUROPEAN PATENT APPLICATION

(11) **EP 4 480 308 A1**
(43) Date of publication of application: **25.12.2024**
(21) Application number: 23216282.6
(22) Date of filing: 13.12.2023
(51) Int. Cl.: A01M 1/20, A01M 29/12

(54) **MOSQUITO REPELLING APPARATUS**

(30) Priority: 20.06.2023 CN 202310740737
(71) Applicant: Li, Wenjie, Guangzhou Guangdong (CN)
(72) Inventor: LI, Wenjie, Guangzhou (CN)
(74) Representative: Zaboliene, Reda

(57) **Abstract**

A mosquito repelling apparatus includes a bottom seat and a bottle body, the bottle body is detachably mounted on the bottom seat, and a repellent drug is loaded in the bottle body; a bottom portion of the bottle body is provided with an atomizer, the atomizer atomizes the repellent drug by ultrasonic waves, the bottom seat supplies power to the atomizer, and an upper portion of the bottle body is opened; and the repellent drug includes Picaridin. The present application uses a mode of atomization to diffuse the repellent agent, which may avoid excessive accumulation of the repellent drug on the skin while mosquitoes are repelled, thus it is more friendly to infants, pregnant women, and other populations.

## Description

### CROSS-REFERENCE TO RELATED APPLICATIONS

This application claims priority to Chinese Patent Application No. 202310740737.6, filed on June 20, 2023, which is incorporated herein by reference in its entirety.

### TECHNICAL FIELD

The present application relates to the technical field of mosquito prevention and control apparatuses, in particular to a mosquito repelling apparatus.

### BACKGROUND

Mosquito repelling is one of the problems that may not be ignored in people's daily life. In order to reduce the impact on users while mosquitoes are prevented and controlled, mildly toxic repellent drugs such as N,N-diethyl-3-methylbenzamide (DEET) are commonly used for mosquito prevention and control. In existing technologies, applications of the repellent drugs are usually limited to a mode of spraying or applying. In order to achieve a better diffusion effect, the above mode requires addition of volatile agents such as alcohol and glycerol to the repellent drugs, as to promote the volatilization and diffusion effect. However, it may cause sticky discomfort on skins, and may also pose hidden safety hazards for people with sensitive skins.

### SUMMARY

The present application provides a mosquito repelling apparatus, as to solve problems in existing technologies that applications of repellent drugs are usually limited to spraying or applying, it may cause sticky discomfort on skins, and may also pose hidden safety hazards for people with sensitive skins.

In order to achieve the above purpose, the present application adopts the following technical schemes.

A mosquito repelling apparatus includes a bottom seat and a bottle body, the bottle body is detachably mounted on the bottom seat, and a repellent drug is loaded in the bottle body; a bottom portion in the bottle body is provided with an atomizer, the atomizer atomizes the repellent drug by ultrasonic waves, when the bottle body is mounted on the bottom seat, the bottom seat supplies power to the atomizer at the bottom portion of the bottle body, and an upper portion of the bottle body is opened; and the repellent drug includes Picaridin.

Further, a high-molecular film is arranged at an upper opening of the bottle body.

Further, the mosquito repelling apparatus further includes an upper housing, the upper housing is mounted on the bottom seat, and an outer side of the bottle body is wrapped by the upper housing; and an upper portion of the upper housing is provided with a ventilation area, and there is a plurality of ventilation holes in the ventilation area.

Further, an outer side of the bottom portion of the bottle body is provided with a contact point electrically connected with the atomizer; and an upper portion of the bottom seat is provided with a conductive connecting piece, and when the bottle body is mounted on the bottom seat, the connecting piece contacts with the contact point.

Further, the bottom seat is internally provided with a power supply element, the power supply element supplies power to the atomizer, a surrounding side of the bottom seat is provided with a switch and a power supply interface, and the switch and the power supply interface are both connected with the power supply element.

Further, the power supply element is a battery or a switching power supply.

Further, the repellent drug further includes one or more of dimethyl carbate, methyl nonyl ketone, and N,N-diethyl-3-methylbenzamide (DEET).

Further, the atomizer is internally provided with a heating unit which is used to raise the temperature of the repellent drug.

Further, the heating working temperature of the atomizer is greater than 40°C and less than 120°C.

The beneficial effects of the present application are as follows.

The use of the atomization mode to diffuse the repellent drug may prevent excessive accumulation of the repellent drug on the skin while mosquitoes are repelled, thus it is more friendly to infants, pregnant women, and other populations.

### BRIEF DESCRIPTION OF THE DRAWINGS

Fig. 1 is a cross-sectional view of a mosquito repelling apparatus.
Fig. 2 is a front view of the mosquito repelling apparatus.

### DETAILED DESCRIPTION OF THE EMBODIMENTS

In order to make purposes, technical schemes, and advantages of the present application clearer, the technical schemes of the present application are further clearly and completely described below in combination with embodiments of the present application. It should be noted that the embodiments described are only a part of the embodiments of the present application, not all of the embodiments. Based on the embodiments in the present application, all other embodiments obtained by those of ordinary skill in the art without creative labor shall fall within the scope of protection of the present application.

It should be noted that if a directional indication (such as up, down, left, right, front, back, top, bottom, inside, outside, vertical, horizontal, longitudinal, counterclockwise, clockwise, circumferential, radial, and axial) is involved in the embodiments of the present application, the directional indication is only used to explain a relative position relationship, a motion situation and the like between various components in a specific posture (as shown in the drawings). If the specific posture is changed, the directional indication is also changed accordingly with it.

The term "and/or" in the embodiments of the present application is only a description of an association relationship of associated objects, it is indicated that there may be three types of relationships, for example, A and/or B, it may indicate: the existence of A alone, the existence of A and B simultaneously, and the existence of B alone.

The terms "first" and "second" in the embodiments of the present application are only used for descriptive purposes and may not be understood as indicating or implying the relative importance or implying the quantity of technical features indicated. Therefore, features limited to "first" and "second" may explicitly or implicitly include at least one of these features. In the description of the present application, the terms "including" and "having" and any variations thereof are intended to cover non-exclusive inclusion. For example, a system, a product, or a device that contains a series of components or units is not limited to the listed components or units, but optionally includes unlisted components or units, or optionally includes other components or units inherent to these products or devices. In the description of the present application, "plurality" means at least two, for example two and three, unless otherwise specified.

The reference to "embodiments" in this article means that specific features, structures, or characteristics described in combination with the embodiments may be contained in at least one embodiment of the present application. The phrase appearing in various positions in the description does not necessarily refer to the same embodiment, nor is it an independent or alternative embodiment that is mutually exclusive with other embodiments. Those skilled in the art explicitly and implicitly understand that the embodiments described in this article may be combined with other embodiments.

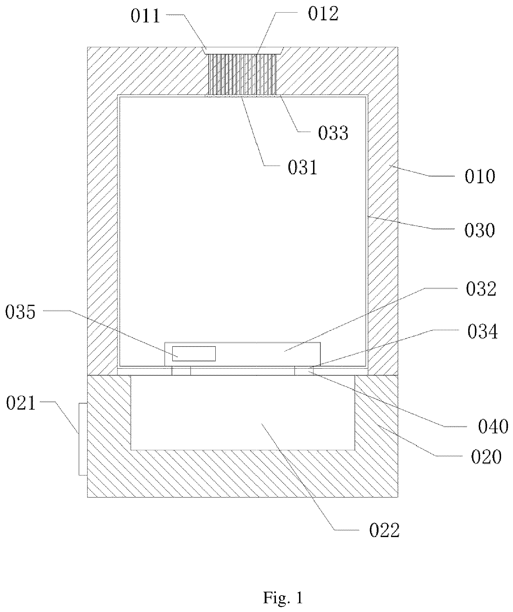

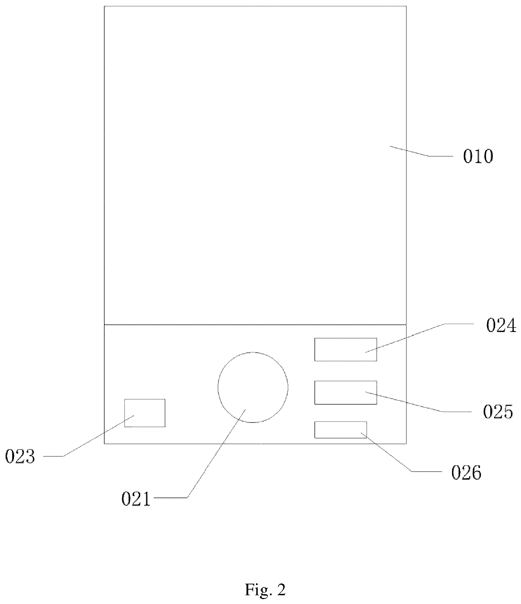

As shown in Figs. 1 and 2, the present application provides a mosquito repelling apparatus, it mainly includes a bottom seat 020 and an upper housing 010, and the upper housing 010 is detachably arranged on the bottom seat 020, herein a top portion of the upper housing 010 has a ventilation area 011, a plurality of ventilation holes 012 is distributed in the ventilation area 011, and the ventilation holes 012 are communicated with an opening 033 of a bottle body 030, namely communicated with a high-molecular film 031; the replaceable bottle body 030 is arranged in a hollow area between the housing 010 and the bottom seat 020 (as shown in the embodiment in Fig. 1, the upper housing 010 is cylindrical, the bottle body 030 is also cylindrical, and the outer diameter of the bottle body 030 is slightly smaller than the inner diameter of the upper housing 010, the upper housing 010 and the bottle body 030 of the present application are not limited to this specific shape), a drug is loaded in the bottle body 030, and a bottom portion inside the bottle body 030 is provided with an atomizer 032 which is used to atomize the drug in the bottle (high-frequency resonance is produced by ultrasonic waves); an opening 033 is arranged in the middle of an upper portion of the bottle body 030, a layer of the high-molecular film 031 is arranged at the opening 033, and it has a microporous structure, so that drug molecules after atomization may pass through smoothly, while liquid in the bottle may not pass through due to surface tension, thus leakage prevention is achieved; and an outer side of the bottom portion of the bottle body 030 is provided with a contact point 034 electrically connected with an atomizer 032, an upper portion of the bottom seat 030 is provided with a conductive connecting piece 040, and when the bottle body 030 is placed on the bottom seat 020, the connecting piece 040 is electrically connected with the contact point, thereby it is achieved that the bottom seat 020 supplies power to the atomizer 032.

The bottom seat 020 is internally provided with a power supply element 022, it may be a battery, and it may also be a switching power supply in other embodiments; and the periphery of the bottom seat 020 is provided with a switch 021 which is used to control power supply of the power supply element 022, and the periphery of the bottom seat 020 is also provided with a power supply interface 023 which is electrically connected with the power supply element 022.

The drug used in the present application is Picaridin (also known as: Icaridin), which has a specific repelling effect on mosquitoes. It may be used as a mosquito repellent and has good volatility itself. In one embodiment of the present application, the atomizer 032 is internally provided with a heating unit 035 which may achieve a heating function, its working temperature is set to be greater than 40°C and less than 120°C (herein the minimum value of 40°C in the interval is a diffusion temperature higher than the normal human body temperature, and the maximum value of 120°C in the interval is an upper limit temperature of the designed maximum reasonable diffusion rate of Picaridin), and a surrounding side of the bottom seat 020 is provided with a first adjustment switch 024, the first adjustment switch 024 has a plurality of temperature ranges, and the first adjustment switch 024 is used to adjust the working temperature of the atomizer 032; the surrounding side of the bottom seat 020 is also provided with a second adjustment switch 025, and the second adjustment switch 025 is used to adjust the ultrasonic frequency range; and the surrounding side of the bottom seat 020 is also provided with a countdown switch 026, and the countdown switch 026 is used to set the working time length of the atomizer 032.

In other embodiments of the present application, the drug may further add one or more of dimethyl carbate, methyl nonyl ketone, and DEET on the basis of Picaridin.

The present application mainly uses the atomizer 032 to atomize and diffuse the drug inside the bottle body 030, as to achieve the mosquito repelling effect. Compared to the mode of directly spraying or applying the drug on the skin, the present application may avoid excessive accumulation of the repellent drug on the skin while mosquitoes are repelled, thus it is more friendly to infants and pregnant women.

The above embodiments only express implementation modes of the present application, and its description is more specific and detailed, but may not be understood as limitations on the scope of the present application. It should be pointed out that for those of ordinary skill in the art, a plurality of modifications and improvements may also be made without departing from the concept of the present application, all of which shall fall within the scope of protection of the present application. Therefore, the scope of protection of the present application should be based on the appended claims.

## Claims

1. A mosquito repelling apparatus, comprising a bottom seat and a bottle body, wherein the bottle body is detachably mounted on the bottom seat, and a repellent drug is loaded in the bottle body;
a bottom portion of the bottle body is provided with an atomizer, the atomizer atomizes the repellent drug by ultrasonic waves, when the bottle body is mounted on the bottom seat, the bottom seat supplies power to the atomizer at the bottom portion of the bottle body, and an upper portion of the bottle body is opened; and
the repellent drug comprises Picaridin.

2. The mosquito repelling apparatus according to claim 1, wherein a high-molecular film is arranged at an upper opening of the bottle body.

3. The mosquito repelling apparatus according to claim 2, wherein the mosquito repelling apparatus further comprises an upper housing, the upper housing is mounted on the bottom seat, and an outer side of the bottle body is wrapped by the upper housing; and
an upper portion of the upper housing is provided with a ventilation area, and there is a plurality of ventilation holes in the ventilation area.

4. The mosquito repelling apparatus according to claim 1, wherein an outer side of the bottom portion of the bottle body is provided with a contact point electrically connected with the atomizer; and
an upper portion of the bottom seat is provided with a conductive connecting piece, and when the bottle body is mounted on the bottom seat, the connecting piece contacts with the contact point.

5. The mosquito repelling apparatus according to claim 1, wherein the bottom seat is internally provided with a power supply element, the power supply element supplies power to the atomizer, a surrounding side of the bottom seat is provided with a switch and a power supply interface, and the switch and the power supply interface are both connected with the power supply element.

6. The mosquito repelling apparatus according to claim 5, wherein the power supply element is a battery or a switching power supply.

7. The mosquito repelling apparatus according to claim 1, wherein the repellent drug further comprises one or more of dimethyl carbate, methyl nonyl ketone, and N,N-diethyl-3-methylbenzamide (DEET).

8. The mosquito repelling apparatus according to claim 1, wherein the atomizer is internally provided with a heating unit which is used to raise a temperature of the repellent drug.

9. The mosquito repelling apparatus according to claim 1, wherein a heating working temperature of the atomizer is greater than 40°C and less than 120°C.
